# FASCICULE DE BREVET EUROPEEN

(11) **EP 0 521 791 B1**
(45) Date de publication et mention de la délivrance du brevet: **26.04.1995**
(21) Numéro de dépôt: 92401898.9
(22) Date de dépôt: 02.07.1992
(51) Int. Cl.: H02K 7/14, H02K 3/50, H02K 29/00

(54) **Structure perfectionnée pour moteur à courant continu à commutation électronique**
Perfektionierter Bau eines Gleichstrommotors mit elektronischer Kommutierung
Improved structure of a direct current motor with electronic commutation

(30) Priorité: 05.07.1991 FR 9108479
(43) Date de publication de la demande: 07.01.1993
(73) Titulaire: ECIA - EQUIPEMENTS ET COMPOSANTS POUR L'INDUSTRIE AUTOMOBILE, F-25400 Audincourt (FR)
(72) Inventeur: Escaravage, Gérard, F-25700 Valentigney (FR); Alberti, Angelo, F-25400 Audincourt (FR)
(74) Mandataire: Polus, Camille

(56) Documents cités:
- EP-A- 0 259 724
- WO-A-87/01879
- DE-A- 3 442 348
- FR-A- 2 651 933

## Description

La présente invention concerne les moteurs électriques à courant continu à commutation électronique et vise plus particulièrement la structure de ces derniers.

Les moteurs à courant continu à commutation électronique se composent, entre autres, d'un carter qui contient un induit bobiné et d'où sort un arbre. Les moyens de commutation de cet induit au lieu d'être constitués classiquement par un dispositif électromécanique fait d'un collecteur et de balais sont, dans ce cas, un dispositif électronique avec un module de commande relié à l'induit fixe du stator.

Ce type de moteur pose habituellement un délicat problème de fabrication, de construction et d'assemblage.

En effet, il faut procéder à la confection des bobinages qui doivent être logés dans des évidements de l'induit, puis il faut assurer la jonction des bouts des fils des bobinages de cet induit avec le circuit électronique du module de commande, et enfin il faut pouvoir dissiper la chaleur des composants de puissance du circuit électronique du module de commande.

Une première source de difficulté est la confection des bobinages de l'induit lorsqu'on désire procéder automatiquement et directement sur l'induit.

Pour assurer la jonction des bouts des fils des bobinages avec le circuit électronique du module de commande, on procède habituellement par soudage des bouts des fils à des cosses gui sont associées directement ou non au circuit électronique. La plupart du temps, compte-tenu de la configuration de la structure du moteur un tel soudage ne peut être fait que manuellement. Ceci est d'autant plus délicat que chaque bobinage nécessite, en principe, deux soudures. Une telle opération, qu'il est particulièrement difficile d'automatiser, est une autre source de difficulté car elle nécessite une très grande agilité et demande du temps; et de telles soudures sont sujettes à des défauts de contact.

Une autre source de difficulté est liée à l'existence du dispositif électronique qui comprend, très souvent, des composants de puissance qu'il faut refroidir afin d'éviter leur échauffement qui serait destructeur. Ceci conduit souvent à scinder le circuit électronique de manière que certains de ses composants ne soient plus sur le substrat du circuit imprimé lui-même mais montés directement sur le carter pour dissiper les calories et améliorer la ventilation. On imagine facilement que ceci complique aussi les opérations de montage et d'assemblage et est aussi source de malfaçons.

Les documents FR-A-26 51 933, FR-A-26 6 0124 et EP-A-0 477 054 offrent des solutions pour résoudre ce type de difficultés.

Une autre source de difficulté est encore liée à la conception de la structure mécanique de ce type de moteur qui est généralement telle qu'il n'est pas possible de procéder automatiquement à son assemblage et à son montage par des opérations simples et à cinématiques non complexes faciles à exécuter à l'aide de robots ou d'automates programmables, car les constituants sont nombreux et de configurations compliquées.

Le but de l'invention est de permettre une automatisation pratiquement totale de la confection ainsi que de l'assemblage et du montage d'un tel moteur du fait que ceux-ci peuvent se faire à l'aide de cinématiques particulièrement simples qui n'exigent que des translations parallèles à l'axe de rotation du moteur.

Outre cette simplification et cette commodité, la conception de cette structure permet d'utiliser des moyens électriques d'alimentation et de commande portés par un circuit imprimé dont le substrat est dépourvu d'évidement central, ce qui augmente la surface utilisable pour l'implantation de composants et de pistes de liaison.

En outre, grâce à la structure selon l'invention, une seule opération permet d'assurer la liaison électrique bobinages de l'induit-moyens d'alimentation et de commande.

L'invention a pour objet une structure pour moteur électrique à courant continu à commutation électronique constitué, entre autres, d'un rotor à inducteur avec un arbre et au moins un palier et d'un stator à induit bobiné portant ce palier et des moyens électriques d'alimentation et de commande de l'induit bobiné. Cette structure est remarquable en ce qu'elle comprend un moyeu support avec des branches équipées d'éléments de fixation pour assujettir le stator et avec un fourreau creux qui est destiné à recevoir intérieurement et coaxialement ce palier et gui est muni en bout d'organes de retenue, un mandrin avec un tube pour recevoir extérieurement cet induit bobiné et qui est destiné à être monté sur ce fourreau et qui est pourvu d'une liaison en rotation et avec une couronne radiale centripète qui est pourvue d'encoches qui sont destinées à coopérer avec ces organes de retenue, et un connecteur en forme de bague qui est destiné à être monté extérieurement sur ce tube du mandrin pour y être immobilisé en rotation par cette liaison et qui est pourvu d'alvéoles destinés à recevoir des broches qui sont aptes à être mises en contact électrique, d'une part, avec l'induit bobiné et, d'autre part avec les moyens électriques d'alimentation et de commande.

D'autres particularités de l'invention ressortiront de la description et des revendications qui suivent ainsi que de l'examen du dessin annexé, donné seulement à titre d'exemple où :
- la Figure 1 est une coupe méridienne partielle schématique d'un mode de réalisation d'un moteur à structure selon l'invention;
- la Figure 2 est une vue de côté du mode de réalisation de la Figure 1 avec des parties dans deux états différents d'assemblage;
- la Figure 3 est une vue perspective de détail schématique d'un moyeu support de la structure de la Figure 1;
- la Figure 4 est une vue perspective de détail schématique d'un mandrin de la structure de la Figure 1;
- la Figure 5 est une vue perspective de détail schématique d'un connecteur de la structure de la Figure 1;
- les Figures 6A, et 6B sont des vues perspectives de détail schématiques de modes de réalisation de broches simple (Figure 6A) et double (Figure 6B) de la structure de la Figure 1; et
- la Figure 7 est une vue perspective de détail schématique d'un plot de la structure de la Figure 1.

Les moteurs électriques à courant continu à commutation électronique étant bien connus dans la technique, on ne décrira dans ce qui suit que ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation et sa variante d'exécution.

Pour la commodité de l'exposé, on décrira successivement chacun des constituants d'un mode de réalisation d'une structure perfectionnée selon l'invention avant d'en exposer la technique de montage et d 'assemblage.

Un moteur électrique à courant continu à commutation électronique comprend un rotor R et un stator S. Le rotor comprend une culasse C avec un inducteur par exemple des aimants permanents AP ainsi qu'un flasque F destiné à porter un arbre A supporté par au moins un palier P. A cette carcasse est associée par exemple une hélice ou analogue, comme illustré, d'un ventilateur.

Le stator comprend un induit bobiné IB fait d'un empilage de tôles T sur lesquelles sont placés des bobinages B logés dans des évidements, comme il est classique.

La mise en rotation d'un tel moteur est assurée par des moyens d'alimentation et de commande constitués, le plus souvent, d'un circuit imprimé CI fait d'un substrat isolant qui porte des conducteurs électriques et sur lequel sont implantés des composants y compris les composants de puissance.

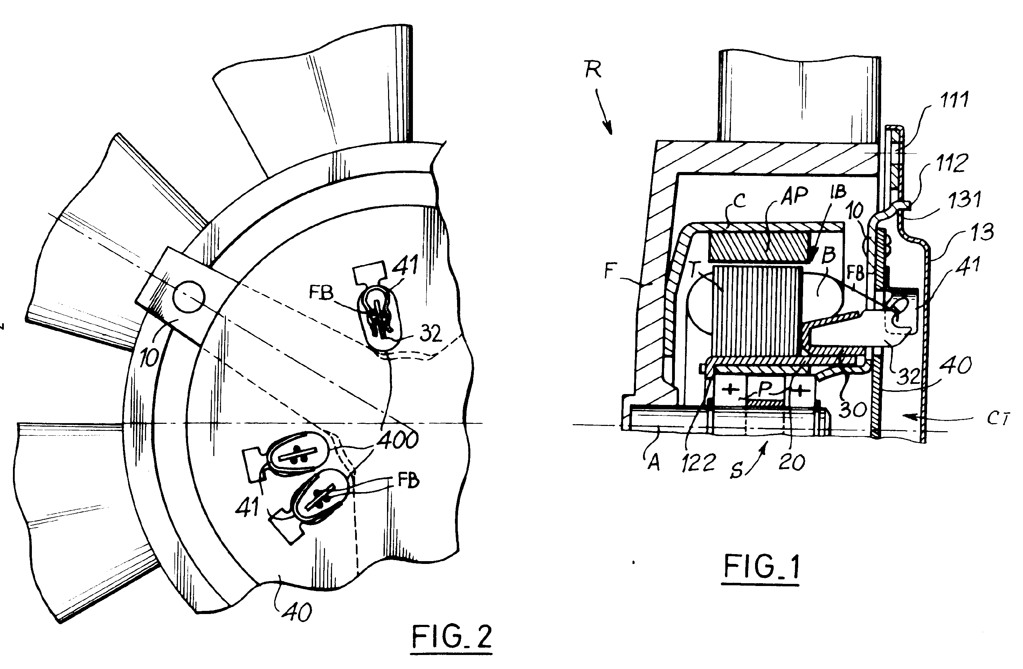

Tout ceci apparaît en particulier de l'examen des Figures 1 et 2.

Pour construire un tel moteur, on utilise une structure perfectionnée selon l'invention. Cette structure perfectionnée comprend notamment un moyeu support 10, un mandrin 20 et un connecteur 30.

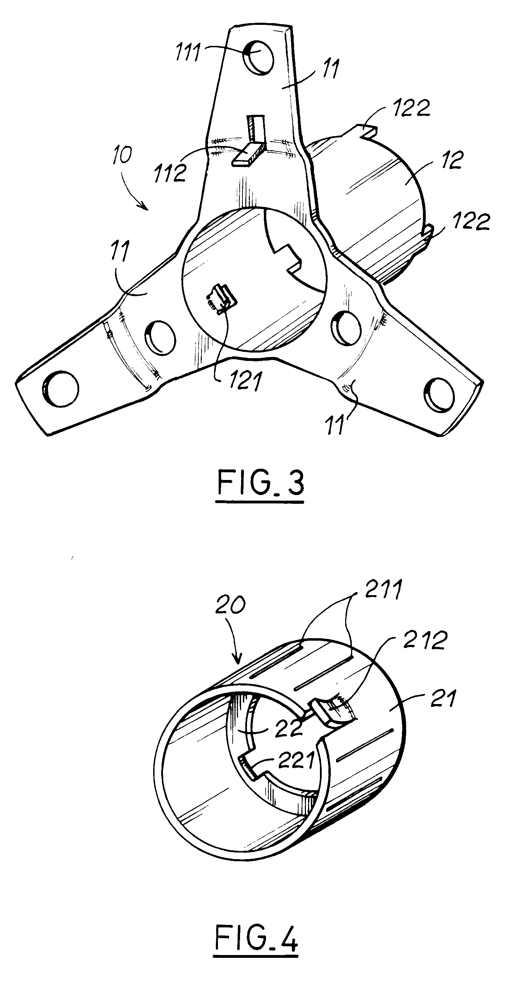

Le moyeu support 10 est constitué de plusieurs branches 11 rayonnantes, par exemple équidistantes, réunies à un fourreau 12. Chacune des branches 11 porte, au voisinage de son extrémité libre un élément de fixation 111 par exemple un trou comme dessiné ou une vis, un rivet ou analogue destiné à assujettir le moteur et en particulier son stator à un bâti d'un appareil par exemple d'un système de refroidissement ou de climatisation d'une automobile lorsque la culasse du rotor porte l'hélice d'un ventilateur comme illustré sur les Figures 1 et 2. Ces branches 11 sont aussi munies d'organes de retenue 112 tels que des ergots ou similaires et dont le rôle sera précisé par la suite. Le fourreau 12, creux, est destiné à recevoir intérieurement et coaxialement le palier P. Le fourreau 12 est muni intérieurement d'au moins une butée 121 obtenue par exemple à l'aide d'un crevé gui dégage une plaquette ou analogue comme illustré clairement sur la Figure 3. Cette butée sert à fixer les positions axiales relatives du fourreau 12 et du ou des paliers P. Le fourreau 12 porte encore, en bout, des organes de retenue 122 telles des pattes dont le rôle apparaîtra par la suite.

De préférence, le moyeu support 10 est destiné à recevoir un couvercle 13 transpercé de trous 131 destinés à recevoir les ergots 112 comme cela apparaît sur la Figure 1.

Le mandrin 20 se compose d'un tube 21 portant à l'une de ses extrémités une couronne 22 radiale centripète. Comme on l'observe sur la Figure 1, le tube 21 est destiné à recevoir extérieurememt l'induit bobiné IB et à être monté sur le fourreau 12. Extérieurement le tube 21 est muni de crantage, moletage 211 ou analogues, de manière à immobiliser en rotation le paquet de tôles T qu'il reçoit. Ce tube 21 est aussi muni d'une liaison en rotation 212 telle une languette ou similaire et dont le rôle apparaîtra par la suite. La couronne 22 est pourvue d'encoches 221 destinées à recevoir les pattes 122 ou analogues du fourreau 12. Ceci apparaît à l'examen de la Figure 1.

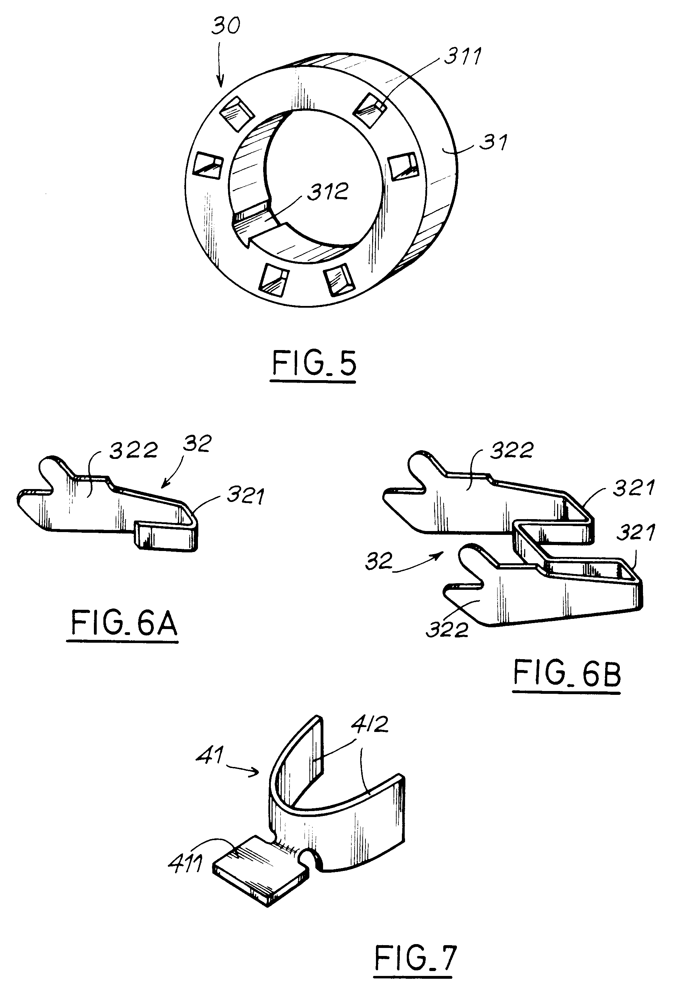

Le connecteur 30 comprend, essentiellement, une bague 31 tronconique (voir Figure 1 en particulier) dans laquelle sont ménagés des alvéoles 311 et qui est creusée intérieurement d'une rainure 312 ou analogue destinée à coopérer avec la languette 212 de la liaison pour immobiliser relativement l'un à l'autre en rotation le mandrin 20 et le connecteur 30. Les alvéoles 31 sont destinés à recevoir des broches 32 simples (Figure 6A) ou multiples par exemple doubles (Figure 6B). Chaque broche 32 se compose d'au moins un pied 321 destiné à être inséré dans un alvéole et d'au moins une lamelle ou cosse 322 destinée à l'ancrage des fils FB des bobinages B de l'induit (voir Figures 1 et 2).

Comme on peut l'observer sur les Figures 1 et 2, le substrat 40 du circuit imprimé CI est transpercé d'ouvertures 400 et porte des plots 41 à proximité de celles-ci. Ces ouvertures 400 sont destinées à être traversées par les broches 32 gui elles-mêmes coopèrent avec les plots 41. Un plot 41 comprend une semelle 411 destinée à être fixée sur le substrat et à être connectée au conducteur ou contre-plot de ce dernier, ainsi que des bras-pinces 412. La manière dont les broches 32 et les plots 41 coopèrent apparaît notamment sur les Figures 1 et 2. Une fois les fils FB des bobinages B ancrés sur les lamelles 322 d'une broche 32, les bras-pinces 412 d'un plot 41 sont rapprochés l'un de l'autre pour enserrer et emprisonner les fils et les maintenir contre la lamelle. Une soudure permet de rendre la connection électrique sûre et mécaniquement indéflectible si nécessaire. Sur la Figure 2, les bras-pinces sont dessinés avant rapprochement sur la moitié inférieure, et après rapprochememt sur la moitié supérieure.

L'examen de la Figure 1 montre immédiatement que les différents constituants de la structure selon l'invention peuvent être engagés les uns dans les autres simplement par des translations axiales, et qu'une fois l'assemblage fait il suffit de rabattre ou d'écraser les ergots 112 et les pattes 122 ou analogues, pour maintenir le tout assemblé mécaniquement, liaison électrique faite.

On observera que le couvercle assure la protection des parties intérieures du moteur contre les poussières et les projections de liquide, et lui confère aussi son aspect final.

De la lecture qui précède, on saisit immédiatement tous les avantages apportés par la structure perfectionnée selon l'invention. On notera spécialement qu'on peut réduire l'encombrement axial du moteur en particulier grâce au coulissement de la bague du connecteur qui autorise le bobinage de l'induit et aux broches qui permettent le raccordement électrique sans que les bouts des fils restent "en l'air, dans le vide" en attendant la jonction.

## Revendications

1. Structure pour moteur électrique à courant continu à commutation électronique constitué, entre autres, d'un rotor à inducteur avec un arbre et au moins un palier et d'un stator à induit bobiné portant ce palier et des moyens électriques d'alimentation et de commande de l'induit bobiné, caractérisée en ce qu'elle comprend un moyeu support (10) avec des branches (11) équipées d'éléments de fixation (111) pour assujettir le stator et avec un fourreau (12) creux qui est destiné à recevoir intérieurement et coaxialement ce palier et qui est muni en bout d'organes de retenue (122), un mandrin (20) avec un tube (21) qui est destiné à recevoir extérieurement cet induit bobiné et qui est destiné à être monté sur le fourreau (12) et qui est pourvu d'une liaison en rotation (212) et avec une couronne (22) radiale centripète qui est pourvue d'encoches (221) qui sont destinées à coopérer avec ces organes de retenue (122), un connecteur (30) en forme de bague (31) destinée à être montée extérieurement sur le tube (21) du mandrin (20) pour y être immobilisé en rotation par la liaison (212) et qui est pourvu d'alvéoles (311) destinés à recevoir des broches (32) qui sont aptes à être mises en contact électrique d'une part avec l'induit bobiné et d'autre part avec les moyens électriques d'alimentation et de commande.

2. Structure selon la revendication 1, caractérisée en ce que la liaison en rotation (212) comprend une languette (212) sur le tube (21) et une rainure (312) dans la bague (31).

3. Structure selon la revendication 1 ou 2, caractérisée en ce que les organes de retenue (122) du fourreau (12) sont des pattes axiales aptes à être rabattues dans les encoches (221) de la couronne (22) du mandrin (20).

4. Structure selon l'une quelconque des revendications 1 à 3, caractérisée en ce que les broches (32) comprennent au moins un pied de montage (321) destiné à être inséré dans un alvéole (311) de la bague (31) et au moins une lamelle (322) destinée à l'ancrage des fils des bobinages d'induit.

5. Structure selon l'une quelconque des revendications 1 à 4, où les moyens d'alimentation et de commande sont portés par un circuit imprimé dont le substrat (40) est transpercé d'ouvertures (400) et porte des plots (41) à proximité de celles-ci, caractérisée en ce que les broches (32) traversent ces ouvertures (400) et coopèrent avec les plots (41).

6. Structure selon la revendication 5, caractérisée en ce que les plots (41) comprennent une semelle (411) reliée électriquement au circuit imprimé et des bras-pince (412) pour enserrer les fils des bobinages d'induit sur les lamelles (322) d'ancrage des broches (32).

7. Structure selon l'une quelconque des revendications 1 à 6, caractérisée en ce que le fourreau (12) comprend au moins une butée (121) intérieure apte à coopérer avec le palier.

8. Structure selon l'une quelconque des revendications 1 à 7, caractérisée en ce que le moyeu support (10) à ses branches (11) munies d'organes de retenue (112) destinés à maintenir un couvercle (13).

9. Structure selon la revendication 8, caractérisée en ce que ces organes de retenue (112) sont des ergots axiaux aptes à être rabattues dans des trous (131) du couvercle (13).

## Patentansprüche

1. Gleichstrommotor mit elektronischer Kommutierung mit einem Induktionsrotor mit einer Welle und mindestens einem Lager und einem Stator mit einem gewickelten Anker, der das Lager trägt, sowie elektrischen Versorgungs- und Steuereinrichtungen für den gewickelten Anker, dadurch gekennzeichnet, daß er eine Lagernabe (10) mit Schenkeln (11), die mit Befestigungselementen (111) zum sicheren Befestigen des Stators und mit einer hohlen Hülse (12) versehen ist, die im inneren und koaxial das Lager aufnimmt und am Ende mit Halteorganen (122) versehen ist, einen Kern (20) mit einem Rohr (21), das außen den gewickelten Anker aufnimmt, an der Hülse montierbar ist und eine Drehverbindung (212) sowie eine radiale, zum Mittelpunkt hinweisende Einfassung (22) aufweist, die mit Aussparungen (221) versehen ist, welche mit den Halteorganen (122) zusammenwirken, und einen Steckverbinder (30) in der Form eines Ringes (31) aufweist, der außen am Rohr (21) des Kernes (20) montierbar ist, um über die verbindung (212) drehfest angeordnet zu werden, und der Steckerbuchsen (311) aufweist, die zur Aufnahme von Zungen (32) dienen, welche einerseits mit dem gewikkelten Anker und andererseits mit den elektrischen Versorgungs- und Steuereinrichtungen in elektrischen Kontakt bringbar sind.

2. Gleichstrommotor nach Anspruch 1, dadurch gekennzeichnet, daß die Drehverbindung (212) eine Lasche (212) am Rohr (21) und eine Nut (312) im Ring (31) umfaßt.

3. Gleichstrommotor nach Anspruch 1 oder 2, dadurch gekennzeichnet, daß die Halteorgane (122) der Hülse (12) Axiallappen sind, die in Aussparungen (221) der Einfassung (22) des Kernes (20) umlegbar sind.

4. Gleichstrommotor nach einem der Ansprüche 1 bis 3, dadurch gekennzeichnet, daß die Zungen (32) mindestens einen Montagegefuß (321), der in eine Steckerbuchse (311) des Ringes (31) einsetzbar ist, und mindestens eine Lamelle (322) umfassen, die zur Verankerung der Drähte der Ankerwicklungen dient.

5. Gleichstrommotor nach einem der Ansprüche 1 bis 4, bei dem die Versorgungs- und Steuereinrichtungen von einer gedruckten Schaltung gebildet sind, deren Substrat (40) mit Öffnungen (400) versehen ist und Kontaktstücke (41) benachbart hierzu trägt, dadurch gekennzeichnet, daß die Zungen (32) die Öffnungen (400) durchdringen und mit den Kontaktstücken (41) zusammenwirken.

6. Gleichstrommotor nach Anspruch 5, dadurch gekennzeichnet, daß die Kontaktstücke (41) einen Flansch (411), der elektrisch an die gedruckte Schaltung angeschlossen ist, und Klemmarme (412) zum Umfassen der Ankerwicklungen an den Verankerungslamellen (322) der Zungen (32) aufweisen.

7. Gleichstrommotor nach einem der Ansprüche 1 bis 6, dadurch gekennzeichnet, daß die Hülse (12) mindestens einen inneren Anschlag (121) aufweist, der mit dem Lager zusammenwirken kann.

8. Gleichstrommotor nach einem der Ansprüche 1 bis 7, dadurch gekennzeichnet, daß die Halteorgane (112) der Schenkel (11) der Lagernabe (10) zum Halten eines Deckels (13) dienen.

9. Gleichstrommotor nach Anspruch 8, dadurch gekennzeichnet, daß die Halteorgane (112) Axialnasen sind, die in Löcher (131) des Deckels (13) umlegbar sind.

## Claims

1. Structure for a direct current electric motor with electronic switching, inter alia constituted by an armature rotor with a shaft and at least one bearing and a wound armature stator carrying said bearing and electrical supply and control means for the wound armature, characterized in that it incorporates a support boss (10) with branches (11) equipped with fixing elements (111) in order to fix the stator and with a hollow sleeve (12) for internally and coaxially receiving said bearing and provided at the end with retaining members (122), a mandrel (20) with a tube (21) for externally receiving said wound armature and which is to be fitted on the sleeve (12) and which is provided with a rotation link (212) and with a centripetal, radial collar (22) provided with notches (221), which are intended to cooperate with the said retaining members (122), a connector (30) in the form of a ring (31) to be externally fitted onto the tube (21) of the mandrel (20) in order to be immobilized in rotation there by the link (212) and which is provided with cavities (311) for receiving pins (32), which can be brought into electrical contact on the one hand with the wound armature and on the other with the electrical supply and control means.

2. Structure according to claim 1, characterized in that the rotation link (212) incorporates a tongue (212) on the tube (21) and a groove (312) in the ring (31).

3. Structure according to claim 1 or 2, characterized in that the retaining members (122) of the sleeve (12) are axial clips which can be turned down in the notches (221) of the collar (22) of the mandrel (20).

4. Structure according to any one of the claims 1 to 3, characterized in that the pins (32) comprise at least one fitting foot (321) to be inserted in a cavity (311) of the ring (31) and at least one segment (322) used for the anchoring of the wires of the armature coils.

5. Structure according to any one of the claims 1 to 4, where the supply and control means are carried by a printed circuit, whose substrate (40) is provided with openings (400) and carries elements (41) in the vicinity thereof, characterized in that the pins (32) traverse said openings (400) and cooperate with the elements (41).

6. Structure according to claim 5, characterized in that the elements (41) comprise a base (411) electrically connected to the printed circuit and gripping arms (412) for enclosing the wires of the armature coils on the segments (322) for anchoring the pins (32).

7. Structure according to any one of the claims 1 to 6, characterized in that the sleeve (12) has at least one internal abutment (121) able to cooperate with the bearing.

8. Structure according to any one of the claims 1 to 7 characterized in that the branches (11) of the support boss (10) are provided with retaining members (112) for holding a cover (13).

9. Structure according to claim 8, characterized in that the retaining members (112) are axial studs which can be turned down in the holes (131) of the cover (13).
